(19) 【Europäisches Patentamt / European Patent Office / Office européen des brevets】

(11) **EP 4 691 679 A1**

(12) **EUROPEAN PATENT APPLICATION**
published in accordance with Art. 153(4) EPC

(43) Date of publication:
**11.02.2026  Bulletin 2026/07**

(21) Application number: **24829010.8**

(22) Date of filing: **17.05.2024**

(51) International Patent Classification (IPC):
**B23K 11/04** (2006.01)   **B23K 11/00** (2006.01)
**B23K 35/30** (2006.01)

(52) Cooperative Patent Classification (CPC):
**B23K 11/00; B23K 11/04; B23K 35/30**

(86) International application number:
**PCT/KR2024/095788**

(87) International publication number:
**WO 2025/023803 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **21.07.2023  KR 20230095621**

(71) Applicant: **POSCO Co., Ltd
Pohang-si, Gyeongsangbuk-do 37859 (KR)**

(72) Inventor: **BAE, Gyu-Yeol
Incheon 21985 (KR)**

(74) Representative: **Meissner Bolte Partnerschaft
mbB
Patentanwälte Rechtsanwälte
Postfach 86 06 24
81633 München (DE)**

(54) **FLASH BUTT WELDING MEMBER AND FLASH BUTT WELDING METHOD**

(57)     A flash-butt joining member and welding method are provided. In the joining member and the welding method with excellent workability, the joining member having excellent workability includes a joint obtained by flash-butt welding a steel plate, and an average effective grain size difference between the coarse-grained heat-affected zone and a fine-grained heat-affected zone formed on either left or right side of the joint is within 10 μm.

FIG. 1A

EP 4 691 679 A1

FIG. 1B

## Description

Technical Field

The present disclosure relates to secure excellent workability of a joint obtained through flash butt welding, and particularly relates to a flash butt joining member and a flash-butt welding method capable of securing sufficient toughness in a joint.

Background Art

In the automotive field, research into lightweight technology for a vehicle body and parts is emerging as a major issue due to fuel efficiency regulation policies for environmental protection such as global warming issues. Chassis and wheel parts, which are important for automobile driving performance, also require the application of high-strength steel for lightening. In order to achieve lightweight parts, high strength of materials is essential, and especially when processing after welding for manufacturing parts, securing the workability of the joint may be the most important factor.

In the case of flash-butt welding, which is mainly used in the manufacturing of automobile wheels, the process is performed by joining accomplished through melting scattering of the joining target surfaces and upset of the melted portion by a flash arc, and it is important to select optimal conditions to ensure workability of the joining portion. In particular, in the case of high-strength steel, the development of brittle structures due to hardening of the joint due to the relatively high carbon equivalent is a factor in reducing workability, and therefore it is necessary to develop process conditions that may control the phase transformation of the joint. In the actual wheel manufacturing line, if the processing crack defect of the joint after welding is high, it may be difficult to apply to mass production, and thus it is important to find a solution therefor. Meanwhile, when manufacturing high-strength and lightweight wheels for commercial vehicles, in addition to the brittleness of the joint described above, an optimal joint microstructure that may prevent the softening of the joint and a welding process control for implementation thereof are essential.

As an example of a related art technique for resolving this, the invention described in Patent Document 1 may be provided. According to patent document 1, an increase in the amount of upset in the joining stage is suggested for effective discharge of oxide inclusions formed at high temperatures during flash-butt welding. In addition, patent document 2 suggests an oil application device for suppressing the formation of oxide inclusions during flash-butt welding of high tensile strength steel. Meanwhile, patent document 3 suggests a method for improving the toughness and workability of the wheel rim joint by appropriately introducing a pre-/upset-/post-heat pattern during flash-butt welding.

However, the related art only presents some solutions for controlling the microstructure of the aforementioned high-strength steel flash-butt joint, and has the limitation of not presenting additional solutions for improving the workability of the joint during the flash-butt welding manufacturing of the parts.

[Prior art literature]

[Patent literature]

(Patent literature 1) Republic of Korea registered patent No. 10-1281294
(Patent literature 2) Republic of Korea registered patent No. 10-0711459
(Patent literature 3) Republic of Korea registered patent No. 10-2178723

Summary of Invention

Technical Problem

An aspect of the present disclosure is to provide a flash-butt joining member having excellent workability and a welding method thereof, as a method for controlling a phase transformation structure of a joint during welding of high-strength steel, by controlling an average effective grain difference between a coarse-grained heat-affected zone and a fine-grained heat-affected zone forming the joint and widths of the coarse-grained heat-affected zone and the fine-grained heat-affected zone forming the joint.

In addition, the technical problems to be achieved in the present disclosure are not limited to the technical problems mentioned above, and other technical problems not mentioned may be clearly understood by a person having ordinary knowledge in the technical field to which the present disclosure belongs from the description below.

Solution to Problem

According to an aspect of the present disclosure, a joining member having excellent workability includes a joint obtained by flash-butt welding a steel plate,

wherein the joint has a coarse-grained heat-affected zone and a fine-grained heat-affected zone formed respectively while facing each other on left and right sides of a joint line, and
an average effective grain size difference between the coarse-grained heat-affected zone and the fine-grained heat-affected zone formed either left or right side of the joint is within 10 $\mu$m.

The joint may have a weld heat-affected zone which is comprised of the coarse-grained heat-affected zone and the fine-grained heat-affected zone and of which a width satisfies the following relationship.

[Relationship]

$$W_{HAZ} \geq t \times 1.77$$

(In the relationship above, $W_{HAZ}$ represents the width of the weld heat-affected zone of the joint, and t represents a thickness of the steel plate.)

The joint may have a difference between a minimum hardness of a weld heat-affected zone comprised of the coarse-grained heat-affected zone and the fine-grained heat-affected zone formed on either left or right side, and a maximum hardness of a base material of the steel plate, being within 30 in Vickers hardness.

The joint may have a difference between a maximum hardness of a weld heat-affected zone comprised of the coarse-grained heat-affected zone the fine-grained heat-affected zone formed on either left or right side, and a minimum hardness of a base material of the steel plate, being within 30 in Vickers hardness.

In the joint, an average effective grain size of the coarse-grained heat-affected zone formed on either left or right side may be 24 $\mu$m or less, and an average effective grain size of the fine-grained heat-affected zone may be 15 $\mu$m or less.

The steel plate may contain, in weight %, C: 0.04 to 0.18%, Si: 2.0% or less (including 0%), Mn: 0.5 to 3.0%, Cr: 2.0% or less (including 0%), Mo: 2.0% or less (including 0%), Al: 0.01 to 0.10%, P: 0.05% or less (excluding 0%), S: 0.05% or less (excluding 0%), a remainder being Fe and other unavoidable impurities.

According to another aspect of the present disclosure, in a flash-butt welding method having excellent joint workability in the flash-butt welding method of flash/upset heating and post-heating at the time of flash-butt welding a steel plate using an electrode, the flash-butt welding method includes controlling a flash speed to 5% or more and 20% or less during pre-heating and flash heating of a surface to be joined of the steel plate, controlling a moving length between electrodes to 2.0 mm or more and 10.0 mm or less during upset heating, and then performing post-heat treatment to form a joint.

The joint may have a coarse-grained heat-affected zone and a fine-grained heat-affected zone facing each other and formed on left and right sides of a joint line, respectively, and may control an average effective grain size difference between the coarse-grained heat-affected zone and the fine-grained heat-affected zone formed on either left or right side of the joint, to be within 10 $\mu$m.

A width of a weld heat-affected zone comprised of the coarse-grained heat-affected zone and the fine-grained heat-affected zone of the joint may satisfy the following relationship.

[Relationship]

$$W_{HAZ} \geq t \times 1.77$$

(In the relationship above, $W_{HAZ}$ represents the width of the weld heat-affected zone of the joint, and t represents a thickness of the steel plate.)

A difference between a minimum hardness of a weld heat-affected zone comprised of the coarse-grained heat-affected zone and the fine-grained heat-affected zone formed on either left or right side of the joint, and a maximum hardness of a base material of the steel plate, may be within 30 in Vickers hardness.

A difference between a maximum hardness of a weld heat-affected zone comprised of the coarse-grained heat-affected zone and the fine-grained heat-affected zone formed on either left or right side of the joint, and a minimum hardness of a base material of the steel plate, may be within 30 in Vickers hardness.

In the joint, an average effective grain size of the coarse-grained heat-affected zone formed on either left or right side may be 24 $\mu$m or less, and an average effective grain size of the fine-grained heat-affected zone may be 15 $\mu$m or less.

Advantageous Effects of Invention

According to the present disclosure, when flash-butt welding high-strength hot-rolled steel having a tensile strength of 590 MPa or more, toughness may be improved by reducing embrittlement or softening of a joint through optimization of a microstructure of the joint, thereby effectively improving strength and workability of the joint of a lightweight steel wheel of an automobile. Therefore, by utilizing this technology for lightweight steel wheels and the like of commercial vehicles, there is an effect that allows for the expansion of the application of high-strength steel.

Brief Description of Drawings

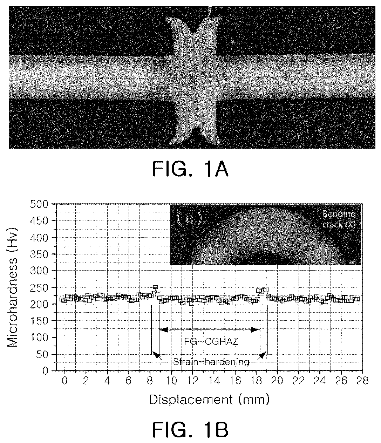

FIGS. 1(a-c) illustrate, in an embodiment of the present disclosure, optical photographs of the cross-sectional structure of the steel plate base material and the flash-butt joint of Invention Example 1 (a), the hardness measurement results thereof (b), and the optical photographs of the cross-sectional structure (no bending cracks) after 180° bending of the joint (c).

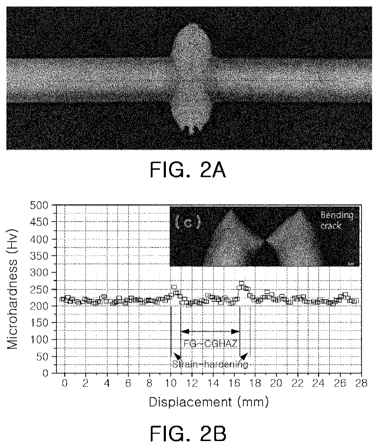

FIGS. 2(a-c) illustrate, in a comparative example of the present disclosure, optical photographs of the cross-sectional structure of the steel plate base material and the flash-butt joint of Comparative Example 1 (a), the hardness measurement results thereof (b), and the optical photographs of the cross-sectional structure (bending cracks occurring) after 180° bending of the joint (c).

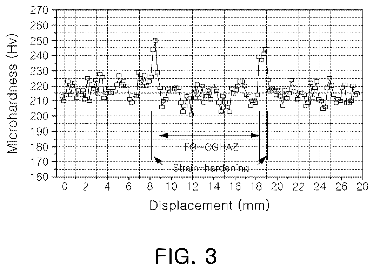

FIG. 3 shows results illustrating a difference in hardness distribution of FIG. 1B in more detail.

Best Mode for Invention

Hereinafter, the present disclosure will be described.
The present disclosure forms a sound joint by introducing preheat/flash/upset heating and post-heat patterns during flash-butt welding, and at the same time, controls the difference in average effective grain size between the coarse-grained heat-affected zone and the fine-grained heat-affected zone formed facing each other on the left and right of the joint, to be within 10 $\mu$m. Accordingly, in a situation where tensile and bending stresses are applied to the joining members, the average effective grain size of the coarse-grained heat-affected zone of the joint, which may have inferior material properties compared to the base material due to phase transformation, is not excessively large compared to the average effective grain size of the fine-grained heat-affected zone with relatively good material properties, or the average effective grain size of the fine-grained heat-affected zone of the joint is not excessively small compared to the average effective grain size of the coarse-grained heat-affected zone with relatively inferior material properties, thereby providing a technology capable of improving the toughness and workability of the joint.
First, a joining member having a joint, with excellent workability, obtained by flash-butt welding a steel plate, which is an aspect of the present disclosure, will be described.
The present disclosure relates to a joining member having a joint obtained by flash-butt welding a steel plate using an electrode, and the joint includes a coarse-grained heat-affected zone and a fine-grained heat-affected zone formed facing each other on the left and right sides based on a joint line. In this case, the joint line refers to a joint interface formed along the weld line when flash-butt welding a butt joint of steel plates.
In addition, the coarse-grained heat-affected zone is a weld heat-affected zone with high brittleness formed by heating to 1200°C or higher, and the fine-grained heat-affected zone is a weld heat-affected zone formed by heating to 850-1000°C, and has good mechanical properties such as toughness and the like due to fine grains formed by recrystallization.
In addition, the joining member having excellent workability of the present disclosure may have an average effective grain size difference between the coarse-grained heat-affected zone and the fine-grained heat-affected zone formed on either left or right side of the joint, being within 10 $\mu$m. If the average effective grain size difference between the coarse-grained heat-affected zone and the fine-grained heat-affected zone exceeds 10 $\mu$m, the material of the joint becomes non-homogeneous, and the workability deteriorates due to the deterioration of the toughness of the coarse-grained heat-affected zone, thereby increasing the crack occurrence rate of the joint. On the other hand, when the average effective grain size difference is within 10 $\mu$m, the toughness and workability of the joint are improved as the materials of the coarse-grained heat-affected zone and the fine-grained heat-affected zone become homogeneous.
Meanwhile, in the present disclosure, the average effective grain size refers to the average size of grains converted from the number of grains per unit area.
In addition, in an embodiment of the present disclosure, in the case of the joint, the width of a weld heat-affected zone comprised of a coarse-grained heat-affected zone and a fine-grained heat-affected zone may satisfy the following relationship.

[Relationship]

$$W_{HAZ} \geq t \times 1.77$$

(In the relationship above, $W_{HAZ}$ represents the width of the weld heat-affected zone of the joint, and t represents the thickness of the steel plate.)

By controlling the width of the weld heat-affected zone to a certain value or more, the average effective grain size of the coarse-grained heat-affected zone of the joint, which may have inferior material properties compared to the base material due to phase transformation, may be prevented from being excessively large compared to the average effective grain size of the fine-grained heat-affected zone, which has relatively good material properties. In addition, by ensuring that the average effective grain size of the fine-grained heat-affected zone of the joint is not excessively small compared to the average effective grain size of the coarse-grained heat-affected zone with relatively inferior material properties, the workability of the joint may be effectively improved. This indicates that even if the width of the weld heat-affected zone increases, the difference in hardness with respect to the steel plate base material is small, and the difference in the average effective grain size between the coarse-grained heat-affected zone and the fine-grained heat-affected zone is within a certain value, thereby uniformly controlling the effective grain size of the weld heat-affected zone, and thus further improving the toughness and workability of the joint.

In addition, in an embodiment of the present disclosure, by controlling the difference between a minimum hardness of the weld heat-affected zone comprised of the coarse-grained heat-affected zone and the fine-grained heat-affected zone and a maximum hardness of the steel plate base material to be within 30 in Vickers hardness, or by controlling the difference between a maximum hardness of the weld heat-affected zone and a minimum hardness of the steel plate base material to be within 30 in Vickers hardness, a joining member with excellent workability may be provided. This is because, as described above, when the weld heat-affected zone of the joint is relatively excessively embrittled or softened compared to the material of the steel plate base material adjacent thereto in various stress-added situations of the joining member, the processing crack of the joint due to local stress concentration may become sensitive.

Furthermore, according to an embodiment of the present disclosure, the average effective grain size of the coarse-grained heat-affected zone and the average effective grain size of the fine-grained heat-affected zone may be similar to the average effective grain size of the base material. For example, when the average effective grain size of the base material is 4 $\mu$m or more and 10 $\mu$m or less, the average effective grain size of the coarse-grained heat-affected zone may be more than 15 $\mu$m and 24 $\mu$m or less, and the average effective grain size of the fine-grained heat-affected zone may be 15 $\mu$m or less. By forming the average effective grain size of the coarse grain heat-affected zone and the average effective grain size of the fine grain heat-affected zone, not being excessively large compared to the average effective grain size of the base material before welding, which is 4 $\mu$m or more and 10 $\mu$m or less, excellent workability of the joint may be secured. When the average effective grain size of the coarse grain heat-affected zone and the average effective grain size of the fine grain heat-affected zone are similar to the average effective grain size of the base material, the probability of occurrence of cracks in situations where tensile and bending stresses are applied to the joint is reduced as the materials between the base material and the heat-affected zone become homogenized.

Meanwhile, the present disclosure does not specifically limit the alloy composition of the steel plate. However, as an example, the steel plate may contain, in wt%, C: 0.04 to 0.18%, Si: 2.0% or less (including 0%), Mn: 0.5 to 3.0%, Cr: 2.0% or less (including 0%), Mo: 2.0% or less (including 0%), Al: 0.01 to 0.10%, P: 0.05% or less (excluding 0%), S: 0.05% or less (excluding 0%), the remainder Fe, and other unavoidable impurities. In addition, the steel plate may optionally further include at least one of Ti: 0.20% or less (including 0%), Nb: 0.10% or less (including 0%), and Cu: 0.10% or less (including 0%). In addition, the steel plate may have a thickness of 2.0 to 6.0 mm.

Next, a flash-butt welding method having excellent workability of a joint, as another aspect of the present disclosure, is described.

In the case of the flash-butt welding method having excellent workability of a joint in the present disclosure, during flash-butt welding in which the joining target surface of a butt joint of a steel plate is flash-butt-welded using an electrode, the joining target surface of the steel plate is controlled at a flash speed of 5% or more and 20% or less at the time of pre-heating and flash heating in performing the flash butt welding method of flash/upset heating and post-heating, and the moving length between electrodes is controlled at 2.0 mm or more and 10.0 mm or less during upset heating, and then post-heat treatment is performed, thereby forming a joint.

In the case of the joint obtained by using the welding process as above, toughness and workability of the joint may be improved. At this time, the preheat/preheat time/flash/flash (heating) length conditions are selected optimally to generate appropriate preheating and flash heating at a level where welding is possible, considering the thickness of the steel, and the flash speed is controlled to 5% or more and 20% or less, and the travel length between the electrodes is controlled to 2.0 mm or more and 10.0 mm or less during upset heating, thereby obtaining a joint with excellent workability.

If the flash speed of the flash butt welding is too low, or the upset heating length or post-heat is too low compared to the appropriate level, the brittleness of the joint increases, and conversely, if the flash speed of the flash butt welding is too high, or the upset heating length or post-heat is too high, the grain size of the heat-affected zone of the joint increases overall due to grain growth, which may be a factor in the deterioration of the properties of the joint. In detail, if the flash speed is less than 5%, problems of defects such as non-bonding or the like may occur due to insufficient heat amount at the joint, and conversely, if the flash speed exceeds 20%, problems such as an increase in the grain size of the weld heat-affected zone due to overheating of the joint or sensitivity to occurrence of defects such as formation of oxide inclusions or the like at the joint interface may occur. In addition, if the moving length between the electrodes is less than 2.0 mm, the molten portion formed during the flash heating process is not sufficiently discharged from the joint interface and is rapidly cooled, which increases the brittleness of the joint, and conversely, if the moving length between the electrodes exceeds 10.0 mm, the problem of softening may occur as the grain size of the weld heat-affected zone increases due to overheating of the joint.

Meanwhile, in the present disclosure, the flash speed refers to the rate at which the gap between electrodes decreases per second compared to an initial electrode gap.

The present disclosure is not limited to detailed process conditions in the process. According to an embodiment of the present disclosure, when the short-circuit current is 100%, the current may be applied in the range of 30 to 40% for preheating, 55 to 60% for flashing, 25 to 40% for upset heating, and 5 to 20% for post-heating. In addition, the preheating time may be 2.0 to 5.0 seconds, the flash (heating) length may be in the range of 2.0 to 4.0 mm, and the upset pressure may be in the range of 50 to 70 bar.

When the welding conditions described above are applied, the average effective grain size difference between the coarse-grained heat-affected zone formed on either left or right side of the joint and the fine-grained heat-affected zone may be controlled to within 10 $\mu$m through the control of the microstructure phase transformation according to the appropriate heating and cooling speed of the joint during welding, thereby enabling the securing of excellent workability through the improvement of the toughness of the joint.

In addition, by controlling the flash speed and upset heating length according to an embodiment of the present disclosure, the discharge of the molten portion may be optimized to prevent defects such as non-bonding, the formation of oxide inclusions in the joint, or the like, and grain growth in the coarse-grained heat-affected zone may be minimized.

Meanwhile, by minimizing the average effective grain size difference between the coarse-grained heat-affected zone and the fine-grained heat-affected zone with relatively good material properties through post-heat control, occurrence of cracks in the joint during the processing of parts may be prevented.

As described above, in the present disclosure, by optimizing the flash-butt welding process and controlling the appropriate flash speed and upset heating length, the discharge of the molten portion is optimized, thereby preventing defects such as non-bonding defects, the formation of oxide inclusions in the joint, or the like. In addition, by minimizing the grain growth of the coarse-grained heat-affected zone generated through the high-temperature heat history, and at the same time, through the post-heat control, an effect in which the material of the joint is made more homogeneous is exerted, thereby minimizing the difference in the average effective grain size between the fine-grained heat-affected zone with relatively good material properties and the coarse-grained heat-affected zone, and thus preventing occurrence of cracks in the joint during component processing.

Mode for Invention

Hereinafter, the present disclosure will be described in detail through examples.

(Examples)

[Table 1]

| Base Materi al No. | Alloy Composition (weight%) | | | | | | | | |
|---|---|---|---|---|---|---|---|---|---|
| | C | Si | Mn | P | S | Al | Ti | Nb | Remaind er |
| 1 | 0.06 | 0.15 | 1.5 | 0.010 | 0.002 | 0.030 | 0.07 | 0.02 | Fe |
| 2 | 0.07 | 0.10 | 1.5 | 0.009 | 0.002 | 0.040 | 0.07 | 0.04 | Fe |

Base materials of Two types of hot-rolled steel plates having a tensile strength of 650 MPa/thickness 4.5 mm/width 300 mm (steel 1) and a tensile strength of 650 MPa/thickness 6.0 mm/width 300 mm (steel 2) and compositions illustrated in Table 1 were prepared respectively. Thereafter, the base materials were prepared to have a rim shape with a coiler, and then the facing surfaces were butt-joined, and flash butt welding was performed with the welding conditions illustrated in Table 2 below. At this time, the preheating/preheating time/flash/flash (heating) length conditions were selected to be the optimal conditions so that appropriate preheating and flash heating could be generated at a level where welding was possible, considering the steel thickness above. Microstructure analysis, hardness measurement, and tensile and bending tests were performed on the joint forming each of the joined members obtained therethrough, and the results are illustrated in Table 3 below. Meanwhile, in Tables 2-3 below, Invention Examples 1-9 and Comparative Examples 1-8 are welding conditions and analysis/evaluation results for steel 1 of Table 1, and Invention Examples 10-18 and Comparative Examples 9-22 are welding conditions and analysis/evaluation results for steel 2 of Table 1.

In addition, in the case of the microstructure analysis, cross-sectional tissue specimens were collected for joints forming respective joining members, then finely polished and etched with a Nital solution, and then observed with an optical microscope. Meanwhile, the average effective grain size (G1) of the coarse grain heat-affected zone, the average effective grain size (G2) of the fine grain heat-affected zone, the difference ($\Delta$G) in the average effective grain sizes between the coarse grain heat-affected zone and the fine grain heat-affected zone, the width ($W_{HAZ}$) of the weld heat-affected zone comprised of the coarse grain heat-affected zone and the fine grain heat-affected zone, the difference ($\Delta$H1) between the minimum hardness of the weld heat-affected zone comprised of the coarse grain heat-affected zone and the fine grain heat-affected zone and the maximum hardness of the steel plate base material, and the difference ($\Delta$H2) between the maximum hardness of the weld heat-affected zone comprised of the coarse grain heat-affected zone and the fine grain heat-affected zone and the minimum hardness of the steel plate base material were measured respectively, and the results are illustrated in Table 3 below.

At this time, the hardness measurement was performed by measuring the Vickers hardness at 0.2 mm intervals under a load of 300 gf for each of the above-mentioned areas, and a minimum of 1,000 or more and a maximum of 1,500 hardness values were obtained. In addition, the width ($W_{HAZ}$) of the weld heat-affected zone consisting of the coarse-grained heat-affected zone and the fine-grained heat-affected zone of the joint was determined as a portion excluding the area (strain-hardening area of FIGS. 1-3) where the heat-affected zone, which has a relatively low temperature compared to the coarse-grained heat-affected zone and the fine-grained heat-affected zone during flash-butt welding, was processing-hardened by upset pressure and had the increased hardness compared to the steel plate base material, as illustrated in FIGS. 1-3.

In addition, as a method of measuring the average effective grain size (G1) of the coarse-grained heat-affected zone and the average effective grain size (G2) of the fine-grained heat-affected zone of the joint, the Kikuchi pattern was analyzed through EBSD (Electron Backscattered Diffraction) to obtain the IQ (Image Quality) and IPF (Inverse Pole Figure) maps that visualize grain boundary and grain orientation information. Then, the grains were distinguished by referring to the IQ and IPF Maps of EBSD together with the microstructure photographs observed with the optical microscope described above, and then the average size of the grains converted from the number of grains per unit area was calculated, thereby measuring each average effective grain size.

In this case, the G1 and G2 were determined to be measured only up to the area corresponding to 50% of the thickness of the steel plate base material, to either left or right side of the joint line (joint interface), considering the area that affects the workability of the joint.

In addition, for each joining member having the joint obtained as described above, a tensile test was performed as illustrated in Table 3 below to evaluate the location where the fracture occurred, and a three-point bending test (4R) was also performed to evaluate whether or not a bending crack occurred. At this time, for the test, tensile specimens were prepared with a size of 50 mm in width/220 mm in length from the joining members corresponding to respective welding conditions, and 5 specimens were evaluated at a tensile speed of 10 mm/min to verify reproducibility, and bending specimens were prepared with a size of 30 mm in width/100 mm in length, and 8 specimens were evaluated at a 180° bend to verify reproducibility. After that, respective specimens were visually observed, and if the tensile fracture was the base material, it was considered as pass (○), if it was the joint, it was considered as fail (X), and if no bending crack occurred, it was considered as pass (○), and if a bending crack occurred, it was considered as fail (X).

[Table 2]

| No. | Distinction | Preheat (%) | Preheat Time (sec) | Flash (%) | Flash Speed (%) | Flash Length (mm) | Upset Heat (%) | Upset Heat Length (mm) | Post heat (%) |
|---|---|---|---|---|---|---|---|---|---|
| 1 | IE1 | 40 | 2.5 | 60 | 15 | 2.0 | 40 | 5.0 | 15 |
| 2 | IE2 | 40 | 2.5 | 55 | 12 | 2.0 | 30 | 7.5 | 10 |
| 3 | IE3 | 40 | 2.5 | 55 | 17 | 2.0 | 35 | 6.0 | 12 |
| 4 | IE4 | 40 | 2.5 | 55 | 10 | 2.0 | 35 | 8.0 | 7 |
| 5 | IE5 | 40 | 2.5 | 60 | 5 | 2.0 | 35 | 10.0 | 5 |

(continued)

| No. | Distinction | Preheat (%) | Preheat Time (sec) | Flash (%) | Flash Speed (%) | Flash Length (mm) | Upset Heat (%) | Upset Heat Length (mm) | Post heat (%) |
|---|---|---|---|---|---|---|---|---|---|
| 6 | IE6 | 40 | 2.5 | 55 | 8 | 2.0 | 40 | 10.0 | 5 |
| 7 | IE7 | 35 | 2.5 | 55 | 11 | 2.0 | 35 | 10.0 | 5 |
| 8 | IE8 | 40 | 2.5 | 55 | 20 | 2.0 | 30 | 4.5 | 15 |
| 9 | IE9 | 40 | 2.5 | 55 | 16 | 2.0 | 30 | 2.0 | 20 |
| 10 | IE10 | 40 | 3.5 | 60 | 13 | 3.0 | 40 | 6.0 | 15 |
| 11 | IE11 | 30 | 3.5 | 60 | 15 | 3.0 | 30 | 8.0 | 10 |
| 12 | IE12 | 30 | 3.5 | 60 | 17 | 3.0 | 30 | 7.0 | 12 |
| 13 | IE13 | 30 | 3.5 | 60 | 6 | 3.0 | 25 | 10.0 | 10 |
| 14 | IE14 | 30 | 3.5 | 60 | 9 | 3.0 | 35 | 9.0 | 5 |
| 15 | IE15 | 40 | 3.5 | 60 | 11 | 3.0 | 30 | 8.5 | 7 |
| 16 | IE16 | 35 | 3.5 | 60 | 15 | 3.0 | 30 | 9.5 | 5 |
| 17 | IE17 | 30 | 3.5 | 60 | 14 | 3.0 | 30 | 10.0 | 10 |
| 18 | IE18 | 30 | 3.5 | 60 | 20 | 3.0 | 30 | 2.0 | 20 |
| 19 | CE1 | 40 | 2.5 | 55 | 4 | 2.0 | 40 | 1.8 | 0 |
| 20 | CE2 | 40 | 2.5 | 55 | 25 | 2.0 | 30 | 0.0 | 5 |
| 21 | CE3 | 40 | 2.5 | 55 | 21 | 2.0 | 30 | 1.5 | 0 |
| 22 | CE4 | 40 | 2.5 | 55 | 22 | 2.0 | 25 | 1.2 | 0 |
| 23 | CE5 | 45 | 2.5 | 60 | 23 | 2.0 | 25 | 11.0 | 0 |
| 24 | CE6 | 40 | 2.5 | 60 | 3 | 2.0 | 25 | 10.5 | 5 |
| 25 | CE7 | 30 | 2.5 | 60 | 4 | 2.0 | 30 | 11.5 | 5 |
| 26 | CE8 | 40 | 2.5 | 60 | 2 | 2.0 | 30 | 12.0 | 0 |
| 27 | CE9 | 30 | 3.5 | 55 | 26 | 3.0 | 40 | 1.5 | 0 |
| 28 | CE10 | 30 | 3.5 | 55 | 22 | 3.0 | 25 | 1.8 | 0 |
| 29 | CE11 | 30 | 3.5 | 55 | 24 | 3.0 | 27 | 1.2 | 0 |
| 30 | CE12 | 30 | 3.5 | 55 | 30 | 3.0 | 30 | 0.0 | 5 |
| 31 | CE13 | 35 | 3.5 | 55 | 21 | 3.0 | 30 | 1.6 | 0 |
| 32 | CE14 | 40 | 3.5 | 55 | 3 | 3.0 | 30 | 1.4 | 5 |
| 33 | CE15 | 30 | 3.5 | 60 | 4 | 3.0 | 25 | 11.0 | 0 |
| 34 | CE16 | 30 | 3.5 | 57 | 23 | 3.0 | 25 | 10.5 | 5 |
| 35 | CE17 | 30 | 3.5 | 55 | 27 | 3.0 | 25 | 12.0 | 0 |
| 36 | CE18 | 30 | 3.5 | 55 | 25 | 3.0 | 25 | 11.5 | 5 |
| 37 | CE19 | 37 | 3.5 | 55 | 3 | 3.0 | 30 | 13.0 | 0 |
| 38 | CE20 | 35 | 3.5 | 55 | 2 | 3.0 | 30 | 11.5 | 0 |
| 39 | CE21 | 35 | 3.5 | 55 | 30 | 3.0 | 30 | 12.0 | 0 |

(continued)

| No. | Distinction | Preheat (%) | Preheat Time (sec) | Flash (%) | Flash Speed (%) | Flash Length (mm) | Upset Heat (%) | Upset Heat Length (mm) | Post heat (%) |
|---|---|---|---|---|---|---|---|---|---|
| 40 | CE22 | 30 | 4.0 | 55 | 4 | 3.0 | 25 | 12.5 | 0 |

*In Table 2 above, the preheat/flash/upset heat/post-heat current% is the ratio of short-circuit current, and the upset heating length refers to the distance traveled between electrodes during upset heating. And IE and CE represent Inventive Example and Comparative Example respectively.

[Table 3]

| | Distinction | Joint Microstructure | | | | | | Joint Properties | |
|---|---|---|---|---|---|---|---|---|---|
| | | G1 | G2 | ΔG | W$_{HAZ}$ | ΔH1 | ΔH2 | Tensile Fracture | Bending Crack |
| 1 | IE1 | 19.2 | 12.4 | 6.8 | 9.0 | 28 | 17 | ○ | ○ |
| 2 | IE2 | 18.7 | 11.6 | 7.1 | 8.8 | 26 | 15 | ○ | ○ |
| 3 | IE3 | 18.9 | 11.7 | 7.2 | 8.7 | 27 | 16 | ○ | ○ |
| 4 | IE4 | 18.5 | 11.5 | 7.0 | 8.5 | 25 | 14 | ○ | ○ |
| 5 | IE5 | 18.3 | 11.0 | 7.3 | 8.2 | 24 | 13 | ○ | ○ |
| 6 | IE6 | 18.2 | 11.1 | 7.1 | 8.1 | 23 | 14 | ○ | ○ |
| 7 | IE7 | 18.0 | 10.8 | 7.2 | 8.0 | 22 | 12 | ○ | ○ |
| 8 | IE8 | 17.8 | 10.6 | 7.2 | 8.2 | 21 | 11 | ○ | ○ |
| 9 | IE9 | 17.5 | 7.5 | 10.0 | 8.0 | 20 | 10 | ○ | ○ |
| 10 | IE10 | 24.0 | 14.7 | 9.3 | 9.5 | 30 | 24 | ○ | ○ |
| 11 | IE11 | 22.5 | 13.2 | 9.3 | 9.3 | 26 | 22 | ○ | ○ |
| 12 | IE12 | 22.4 | 13.0 | 9.4 | 9.4 | 25 | 23 | ○ | ○ |
| 13 | IE13 | 21.2 | 12.6 | 8.6 | 9.2 | 23 | 20 | ○ | ○ |
| 14 | IE14 | 21.0 | 12.5 | 8.5 | 9.0 | 22 | 18 | ○ | ○ |
| 15 | IE15 | 23.7 | 13.7 | 10.0 | 9.6 | 28 | 21 | ○ | ○ |
| 16 | IE16 | 22.3 | 15.0 | 7.3 | 9.4 | 25 | 20 | ○ | ○ |
| 17 | IE17 | 21.5 | 13.2 | 8.3 | 9.7 | 26 | 24 | ○ | ○ |
| 18 | IE18 | 18.3 | 11.5 | 6.8 | 8.6 | 22 | 13 | ○ | ○ |
| 19 | CE1 | 16.4 | 4.6 | 11.8 | 5.2 | 27 | 15 | X | X |
| 20 | CE2 | 16.0 | 5.5 | 10.5 | 5.0 | 25 | 13 | X | X |
| 21 | CE3 | 16.2 | 4.5 | 11.7 | 5.1 | 26 | 14 | X | X |
| 22 | CE4 | 16.1 | 4.3 | 11.8 | 4.8 | 24 | 12 | X | X |
| 23 | CE5 | 23.3 | 8.9 | 14.4 | 6.2 | 28 | 17 | ○ | X |
| 24 | CE6 | 23.1 | 9.2 | 13.9 | 6.1 | 27 | 15 | ○ | X |
| 25 | CE7 | 23.5 | 9.4 | 14.1 | 6.4 | 26 | 16 | ○ | X |
| 26 | CE8 | 24.0 | 9.6 | 14.4 | 6.7 | 32 | 18 | X | X |
| 27 | CE9 | 24.1 | 8.5 | 15.6 | 5.3 | 27 | 15 | X | X |
| 28 | CE10 | 23.6 | 9.7 | 13.9 | 5.1 | 25 | 13 | ○ | X |
| 29 | CE11 | 23.4 | 9.8 | 13.6 | 5.2 | 26 | 14 | X | X |
| 30 | CE12 | 22.9 | 9.6 | 13.3 | 5.0 | 23 | 12 | X | X |

(continued)

| | Distin ction | Joint Microstructure | | | | | | Joint Properties | |
|---|---|---|---|---|---|---|---|---|---|
| | | G1 | G2 | ΔG | $W_{HAZ}$ | ΔH1 | ΔH2 | Tensi le Fract ure | Bendi ng Crack |
| 31 | CE13 | 23.8 | 9.9 | 13.9 | 5.3 | 27 | 15 | X | X |
| 32 | CE14 | 24.3 | 10.2 | 12.1 | 5.5 | 29 | 17 | X | X |
| 33 | CE15 | 25.2 | 12.0 | 13.2 | 6.8 | 32 | 21 | X | X |
| 34 | CE16 | 24.9 | 12.1 | 12.8 | 7.1 | 31 | 19 | ○ | X |
| 35 | CE17 | 25.4 | 11.8 | 13.6 | 7.0 | 30 | 18 | X | X |
| 36 | CE18 | 24.8 | 12.2 | 12.6 | 7.2 | 29 | 16 | ○ | X |
| 37 | CE19 | 26.2 | 12.7 | 13.5 | 7.5 | 33 | 22 | X | X |
| 38 | CE20 | 25.8 | 12.5 | 13.3 | 7.9 | 31 | 19 | X | X |
| 39 | CE21 | 26.1 | 12.4 | 13.7 | 7.7 | 30 | 17 | X | X |
| 40 | CE22 | 26.3 | 12.3 | 14.0 | 8.0 | 32 | 18 | X | X |

G1: Average effective grain size of coarse-grained heat-affected zone($\mu$m)

G2: Average effective grain size of fine-grained heat-affected zone($\mu$m)

ΔG: Average effective grain size difference between coarse-grained heat-affected zone and fine-grained heat-affected zone($\mu$m)

$W_{HAZ}$: Width of heat-affected zone including coarse-grained heat-affected zone and fine-grained heat-affected zone($\mu$m)

ΔH1: Difference between minimum hardness of heat-affected zone including coarse-grained heat-affected zone and fine-grained heat-affected zone and maximum hardness of steel plate base material

ΔH2: Difference between maximum hardness of heat-affected zone including coarse-grained heat-affected zone and fine-grained heat-affected zone and minimum hardness of steel plate base material

* IE and CE represent Inventive Example and Comparative Example respectively.

As illustrated in Table 2-3 above, by sequentially using the preheat/flash/upset heating processes and performing flash butt welding under various welding conditions, the flash speed of the obtained joint satisfies 5% or more and 20% or less, and the upset heating length satisfies 2.0 mm or more and 10.0 mm or less, so that the value of ΔG may satisfy within 10 $\mu$m. In addition, it can be seen that in the case of Invention Examples 1-9 (steel 1) and Invention Examples 10-18 (steel 2), fracture occurs in the base material during the tensile test and no bending crack occurs during the bending test.

In contrast, when the flash speed of the joint obtained with the various welding conditions above is out of 5% or more and 20% or less, and the upset heating length is out of the range of 2.0 mm or more and 10.0 mm or less, the value of ΔG may exceed the range of within 10 $\mu$m. In addition, thus, in the case of Comparative Examples 1-8 (Steel 1) and 9-22 (Steel 2) that are out of the given range, it can be seen that tensile fracture and/or bending cracks occurred at the joint. This is because, as described above, in a situation where tensile and bending stresses are applied to the joining member, when the average effective grain size of the coarse-grained heat-affected zone, which has inferior material properties compared to the base material due to phase transformation, is embrittled or softened to a level exceeding 10 $\mu$m compared to the average effective grain size of the fine-grained heat-affected zone, which has relatively good material properties, the difference in toughness or strength between the coarse-grained heat-affected zone and the fine-grained heat-affected zone increases, making the relevant area vulnerable.

FIGS. 1(a-c) illustrate cross-sectional structure optical photographs (a) of the steel plate base material and flash-butt joint of Invention Example 1 in an embodiment of the present disclosure, the hardness measurement results therefor (b), and the cross-sectional structure (no bending cracks occurred) optical photographs (c) of the joint after 180° bending.

In this case, as described above, in Invention Example 1, since the flash speed and upset heating length are suitable, and the value of ΔG satisfies the range within 10 $\mu$m, it can be seen that cracks do not occur after 180° bending of the joint.

FIGS. 2(a-c) illustrate, in the comparative example of the present disclosure, an optical photograph of a cross-sectional structure of a steel plate base material and a flash-butt joint of Comparative Example 1 (a), a hardness measurement result therefor (b), and an optical photograph of a cross-sectional structure (bending crack occurrence) of the joint after 180° bending (c).

In this case, Comparative Example 1, as described above, illustrates that cracks occurred after 180° bending of the joint because the flash speed and upset heating length were not suitable, and the value of ΔG was out of the range of within 10 μm.

FIG. 3 is a result illustrating the difference in hardness distribution of FIG. 1B in more detail.

In this case, FG to CGHAZ of FIG. 1B, FIG. 2B, and FIG. 3 represent fine-grained and coarse-grained heat-affected zones, and strain-hardening represents a region where the heat-affected zone, which has a relatively low temperature compared to FG to CGHAZ during flash butt welding, is processing-hardened by upset pressure and has increased hardness compared to the steel plate base material. The strain-hardening region is outside the region that actually affects the workability of the joint, and therefore, it was not considered a heat-affected zone that directly affects the workability of the joint.

As described above, in the detailed description of the present disclosure, preferred embodiments of the present disclosure have been described, but it is obvious to those skilled in the art that various modifications may be made without departing from the scope of the present disclosure. Therefore, the scope of the rights of the present disclosure should not be limited to the described embodiments, but should be determined by the claims described below as well as their equivalents.

## Claims

1. A joining member having excellent workability comprising:

   a joint obtained by flash-butt welding a steel plate,
   wherein the joint includes a coarse-grained heat-affected zone and a fine-grained heat-affected zone formed respectively while facing each other on left and right sides of a joint line, and
   an average effective grain size difference between the coarse-grained heat-affected zone and the fine-grained heat-affected zone formed either left or right side of the joint is within 10 μm.

2. The joining member having excellent workability of claim 1, wherein the joint has a weld heat-affected zone which is comprised of the coarse-grained heat-affected zone and the fine-grained heat-affected zone and of which a width satisfies the following relationship,

   [Relationship]

   $$W_{HAZ} \geq t \times 1.77,$$

   wherein, in the relationship, $W_{HAZ}$ represents the width of the weld heat-affected zone of the joint, and t represents a thickness of the steel plate.

3. The joining member having excellent workability of claim 1, wherein the joint has a difference between a minimum hardness of a weld heat-affected zone comprised of the coarse-grained heat-affected zone and the fine-grained heat-affected zone and a maximum hardness of a base material of the steel plate, being within 30 in Vickers hardness.

4. The joining member having excellent workability of claim 1, wherein the joint has a difference between a maximum hardness of a weld heat-affected zone comprised of the coarse-grained heat-affected zone and the fine-grained heat-affected zone and a minimum hardness of a base material of the steel plate, being within 30 in Vickers hardness.

5. The joining member having excellent workability of claim 1, wherein an average effective grain size of the coarse-grained heat-affected zone is 24 μm or less, and an average effective grain size of the fine-grained heat-affected zone is 15 μm or less.

6. The joining member having excellent workability of claim 1, wherein the steel plate contains, in weight %, C: 0.04 to 0.18%, Si: 2.0% or less (including 0%), Mn: 0.5 to 3.0%, Cr: 2.0% or less (including 0%), Mo: 2.0% or less (including 0%), Al: 0.01 to 0.10%, P: 0.05% or less (excluding 0%), S: 0.05% or less (excluding 0%), a remainder being Fe and other unavoidable impurities.

7. A flash-butt welding method having excellent joint workability in the flash-butt welding method of flash/upset heating and post-heating at the time of flash-butt welding a steel plate using an electrode, the flash-butt welding method comprising:

controlling a flash speed to 5% or more and 20% or less during pre-heating and flash heating of a surface to be joined of the steel plate, controlling a moving length between electrodes to 2.0 mm or more and 10.0 mm or less during upset heating, and then performing post-heat treatment to form a joint.

8. The flash-butt welding method having excellent joint workability of claim 7, wherein when a short-circuit current of the joint is 100%, post-heating is controlled to 5% or more and 20% or less.

9. The flash-butt welding method having excellent joint workability of claim 7, wherein the joint includes a coarse-grained heat-affected zone and a fine-grained heat-affected zone facing each other and formed on left and right sides of a joint line, respectively, and
an average effective grain size difference between the coarse-grained heat-affected zone and the fine-grained heat-affected zone formed on either left or right side of the joint is within 10 $\mu$m.

10. A component having the joint of any one of claims 1 to 6.

FIG. 1A

FIG. 1B

FIG. 2A

FIG. 2B

FIG. 3

## INTERNATIONAL SEARCH REPORT

| International application No. |
|---|
| **PCT/KR2024/095788** |

**A.    CLASSIFICATION OF SUBJECT MATTER**

**B23K 11/04**(2006.01)i; **B23K 11/00**(2006.01)i; **B23K 35/30**(2006.01)i

According to International Patent Classification (IPC) or to both national classification and IPC

**B.    FIELDS SEARCHED**

Minimum documentation searched (classification system followed by classification symbols)

B23K 11/04(2006.01); B23K 11/02(2006.01); B23K 11/34(2006.01); C22C 38/00(2006.01); C22C 38/30(2006.01); C22C 38/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 섬광맞댐용접(flash butt welding), 열영향부(heat, affected zone, HAZ), 결정립 (crystal grain), 폭(width), 및 플래시 속도(flash speed)

**C.    DOCUMENTS CONSIDERED TO BE RELEVANT**

| Category* | Citation of document, with indication, where appropriate, of the relevant passages | Relevant to claim No. |
|---|---|---|
| DX<br><br>DY | KR 10-2178723 B1 (POSCO) 13 November 2020 (2020-11-13)<br>See paragraphs [0010] and [0034]-[0061] and figures 1 and 2. | 1-5,10<br><br>6-9 |
| Y | JP 2004-360047 A (NIPPON STEEL CORPORATION) 24 December 2004 (2004-12-24)<br>See paragraphs [0015]-[0019] and figures 1 and 2. | 6 |
| Y | US 2023-0193438 A1 (NIPPON STEEL CORPORATION) 22 June 2023 (2023-06-22)<br>See paragraphs [0171]-[0191] and [0278]-[0285]. | 7-9 |
| A | JP 2012-101280 A (NIPPON STEEL CORPORATION) 31 May 2012 (2012-05-31)<br>See paragraphs [0056]-[0058] and figures 2 and 3. | 1-10 |
| A | CN 102107320 A (SHOUGANG CO., LTD. et al.) 29 June 2011 (2011-06-29)<br>See paragraphs [0004]-[0006]. | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 August 2024** | **28 August 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/095788** |

| Patent document cited in search report | | | Publication date (day/month/year) | Patent family member(s) | | | Publication date (day/month/year) |
| --- | --- | --- | --- | --- | --- | --- | --- |
| KR | 10-2178723 | B1 | 13 November 2020 | BR | 112021006760 | A2 | 10 May 2022 |
| | | | | CN | 113165101 | A | 23 July 2021 |
| | | | | CN | 113165101 | B | 04 October 2022 |
| | | | | EP | 3851236 | A1 | 21 July 2021 |
| | | | | EP | 3851236 | B1 | 29 March 2023 |
| | | | | JP | 2022-502256 | A | 11 January 2022 |
| | | | | JP | 7125543 | B2 | 24 August 2022 |
| | | | | MX | 2021003856 | A | 27 May 2021 |
| | | | | US | 2021-0379688 | A1 | 09 December 2021 |
| | | | | WO | 2021-045426 | A1 | 11 March 2021 |
| JP | 2004-360047 | A | 24 December 2004 | JP | 4264298 | B2 | 13 May 2009 |
| US | 2023-0193438 | A1 | 22 June 2023 | BR | 112023001279 | A2 | 11 April 2023 |
| | | | | CA | 3185907 | A1 | 07 April 2022 |
| | | | | JP | 7417170 | B2 | 18 January 2024 |
| | | | | WO | 2022-071007 | A1 | 07 April 2022 |
| JP | 2012-101280 | A | 31 May 2012 | JP | 5659965 | B2 | 28 January 2015 |
| CN | 102107320 | A | 29 June 2011 | None | | | |

Form PCT/ISA/210 (patent family annex) (July 2022)

**REFERENCES CITED IN THE DESCRIPTION**

**Patent documents cited in the description**

- KR 101281294
- KR 100711459
- KR 102178723